Europäisches Patentamt

**European Patent Office**

**Office européen des brevets**

(11) Veröffentlichungsnummer: **0 312 795 B1**

(12) **EUROPÄISCHE PATENTSCHRIFT**

(45) Veröffentlichungstag der Patentschrift: **12.12.90**

(21) Anmeldenummer: **88115627.7**

(22) Anmeldetag: **23.09.88**

(51) Int. Cl.⁵: **H04N 5/76, H04N 5/04**

(54) Verfahren zur Programmierung eines Empfängers mit Videorecorder zur Aufzeichnung von über Satellit übertragenen Fernseh-Programmbeiträgen.

(30) Priorität: **22.10.87 DE 3735782**

(43) Veröffentlichungstag der Anmeldung:
**26.04.89 Patentblatt 89/17**

(45) Bekanntmachung des Hinweises auf die Patenterteilung:
**12.12.90 Patentblatt 90/50**

(84) Benannte Vertragsstaaten:
**AT DE FR GB IT**

(56) Entgegenhaltungen:
**EP-A- 0 183 625**
**EP-A- 0 254 927**

(73) Patentinhaber: **GRUNDIG E.M.V. Elektro-Mechanische Versuchsanstalt Max Grundig holländ. Stiftung & Co. KG., Kurgartenstrasse 37, D-8510 Fürth/Bay.(DE)**

(72) Erfinder: **Hegendörfer, Max GRUNDIG E.M.V., Max Grundig holländ. Stiftung & Co KG, Kurgartenstrasse 37 D-8510 Fürth/Bay(DE)**

**Beschreibung**

Die Erfindung betrifft ein Verfahren zur Programmierung eines Empfängers/Recorders zur Aufzeichnung von über Satellit übertragenen Fernseh-Programmbeiträgen mit den im Oberbegriff des Anspruchs 1 angegebenen Merkmalen, wie es in der nicht vorveröffentlichten europäischen Patentanmeldung EP-A 0 254 927 beschrieben ist.

Uber Satellit übertragene Fernseh-Programmbeiträge sind in der Regel gleichzeitig in verschiedenen Ländern empfangbar. Diese verschiedenen Länder können unter Umständen verschiedene Ortszeiten haben.

Aus der europäischen Patentanmeldung EP-A 0 183 625 ist es bereits bekannt, eine zusammen mit einem Satelliten-Fernsehsignal übertragene Programmvorschau anzuzeigen, wobei vor der Anzeige eine Umrechnung der in der Programmvorschau enthaltenen Anfangszeiten der Sendungen in eine andere Ortszeit erfolgt. Dabei wird die Ortszeit des Empfängers mittels eines Drehknopfes am Gehäuse des Empfängers festgelegt. Weiterhin wird ein Kennsignal für die Ortszeit des Senders zusammen mit dem Fernsehsignal vom Sender zum Empfänger übertragen.

Beispielsweise beträgt die Zeitverschiebung zwischen der Bundesrepublik Deutschland und England eine Stunde. Soll nun beispielsweise mittels eines in Deutschland aufgestellten Empfangsgerätes/Recorders, dessen Uhr auf die deutsche Ortszeit eingestellt ist, ein Programmbeitrag eines über Satellit sendenden englischen Senders automatisch aufgezeichnet werden, so muß der Kunde die zwischen Deutschland und England bestehende Zeitverschiebung bei der Programmierung des Empfangsgerätes/Recorders berücksichtigen.

Dies ist jedoch umständlich und in der Praxis mit Schwierigkeiten verbunden, da mittels des Empfangsgerätes eine Vielzahl von Fernseh-Programmbeiträgen unterschiedlicher Sender, die ihrerseits mehrere unterschiedliche Ortszeiten haben können, empfangbar ist und der Kunde oft gar nicht weiß, welche Ortszeit welchem Sender zugeordnet werden muß.

Hiervon ausgehend liegt der Erfindung die Aufgabe zugrunde, ein Verfahren der im Oberbegriff des Anspruchs 1 angegebenen Art derart weiterzubilden, daß die richtige Einschalt- und Ausschaltzeit des Empfangsgerätes zur Aufzeichnung eines gewünschten Programmbeiträges auch dann mit der Sendezeit des gewünschten Programmbeiträges übereinstimmt, wenn die Ortszeiten von Sender und Empfänger voneinander abweichen.

Diese Aufgabe wird durch die im kennzeichnenden Teil des Patentanspruchs angegebenen Merkmale gelöst.

Die Vorteile der Erfindung bestehen insbesondere darin, daß der Benutzer bei der Programmierung des Empfangsgerätes/Recorders keinerlei Maßnahmen treffen muß, um sicherzustellen, daß die wirkliche Einschalt-und Ausschaltzeit des Empfangsgerätes/Recorders mit der Sendezeit des gewünschten Programmbeiträges übereinstimmt, selbst wenn die Ortszeit des Senders und die Ortszeit des Empfängers/Recorders voneinander abweichen.

Weitere vorteilhafte Eigenschaften der Erfindung ergeben sich anhand eines Ausführungsbeispieles, welches im folgenden näher erläutert wird.

Es sei angenommen, daß ein in Deutschland aufgestellter Empfänger/Videorecorder, dessen Uhr auf die deutsche Ortszeit eingestellt ist, zur Aufzeichnung eines Programmbeiträges eines über Satellit ausstrahlenden englischen Fernsehsenders programmiert werden soll. Dies geschieht wie folgt: Der Benutzer entnimmt beispielsweise einer Programmzeitung die zum Programmieren des Empfängers/ Videorecorders erforderlichen Daten des gewünschten Programmbeiträges, die nicht mit der richtigen Sendezeit nach Ortszeit übereinstimmen und programmiert seinen Empfänger/Recorder mit Hilfe der dafür vorgesehenen Tastatur auf der Fern- oder Nahbedienung des Empfängers/ Recorders. Nach dem Abschluß der Programmierung hat der Empfänger/Recorder die Information gespeichert, die den Abstimmdaten sowie Ein- und Ausschaltzeiten des gewünschten Programmbeiträges entspricht.

Jedem Abstimmdatensatz ist erfindungsgemäß ein definierter Speicherbereich eines nichtflüchtigen Speichers des Empfängers/Videorecorders zugeordnet, in dem zusätzlich ein Kennsignal für die Ortszeit des zugehörigen Senders abgespeichert ist.

Dieses Kennsignal für die Ortszeit des Senders wird aus dem Speicher ausgegeben und mit einem Kennsignal für die Ortszeit des Empfängers/Recorders, welches beispielsweise von der Empfängeruhr abgeleitet wird, verglichen. Dieser Vergleich liefert ein Fehlersignal, welches ein Maß für die Zeitverschiebung zwischen der Ortszeit des Senders und der Ortszeit des Empfängers/Recorders darstellt. Dieses Fehlersignal wird verwendet, um die obengenannten, beispielsweise einer Programmzeitung entnommenen Daten des gewünschten Programmbeiträges innerhalb des Empfängers/Recorders automatisch derart zu modifizieren, daß die Ein- und Ausschaltzeit des Empfängers/Recorders auch dann an die tatsächliche Sendezeit angepaßt ist, wenn Sender und Empfänger unterschiedliche Ortszeiten aufweisen.

Die zusätzliche Abspeicherung der Kennsignale für die Ortszeiten der am Empfängerort empfangbaren Satelliten-Sender in den verschiedenen oder diesen zugeordneten Speicherbereichen für die Abstimmdaten des nichtflüchtigen Speichers kann grundsätzlich durch den Gerätehersteller, durch den Gerätelieferanten (Fachgeschäft) oder auch vom Benutzer selbst durchgeführt werden.

Auch die Zuordnung der verschiedenen Speicherbereiche zu den einzelnen Abstimmdaten kann durch den Gerätelieferanten oder vom Benutzer in bekannter Weise selbst durchgeführt werden.

Die vorliegende Erfindung ist nicht auf das oben angegebene Ausführungsbeispiel beschränkt. Es ist beispielsweise ebenso denkbar, die Programmierung des Empfängers/Videorecorders unter Verwendung einer im Rahmen eines Videotextdienstes angebotenen Programmvorschau oder unter Verwendung eines Strichcodelesers durch Abtastung eines gedruckten Strichcodes durchzuführen.

**Patentansprüche**

Verfahren zur Programmierung eines Empfängers/Recorders zur Aufzeichnung von über Satellit übertragenen Fernseh-Programmbeiträgen, mit folgenden Verfahrensschritten:
- Es wird unter Verwendung einer Bedientastatur, die zur Aufzeichnung eines Programmbeitrages notwendige Ein- und Ausschaltzeit dem zu programmierenden Empfängers mitgeteilt,
- die Ein- und Ausschaltzeit wird in einem Speicherdes Empfängers abgespeichert,
dadurch gekennzeichnet, daß
- durch Vergleich eines im Empfänger/Recorder abgespeicherten Kennsignals für die Ortszeit des Senders mit einem von der Empfängeruhr abgeleiteten Kennsignal für die Ortszeit des Empfängers ein Fehlersignal ermittelt wird, und
- mittels dieses Fehlersignals, welches ein Maßfür die Zeitverschiebung zwischen der Ortszeit des Senders des aufzuzeichnenten Programmbeitrages und der Ortszeit des Empfängers darstellt, die dem Empfänger mitgeteilte Ein- und Ausschaltzeit an die tatsächliche Sendezeit das aufzuzeichnenden Programmbeitrages angepaßt wird.

**Claims**

1. Method for programming a receiver/recorder for recording television programme contributions transmitted via satellite, comprising the following method steps:
- the receiver to be programmed is informed of the switching-on and off time necessary for recording a programme contribution, using an operating keyboard,
- the switching-on and off time is stored in a memory of the receiver, characterized in that
- an error signal is determined by comparing an identification signal for the local time of the transmitter, stored in the receiver/recorder, with an identification signal for the local time of the receiver, derived from the receiver clock, and
- by means of this error signal, which represents a measure of the time displacement between the local time of the transmitter of the programme contribution to be recorded and the local time of the receiver, the switching-on and off time imparted to the receiver is adapted to the actual transmitting time of the programme contribution to be recorded.

**Revendications**

1. Procédé pour programmer un récepteur/enregistreur pour l'enregistrement de séquences de programmes de télévision transmises par satellite, incluant les étapes opératoires suivantes:
- les instants de démarrage et d'arrêt nécessaires pour l'enregistrement d'une séquence de programme sont communiqués au moyen de l'utilisation d'un clavier de service au récepteur devant être programmé,
- les instants de démarrage et d'arrêt sont mémorisés dans une mémoire du récepteur, caractérisé par le fait que
- un signal d'erreur est déterminé par comparaison d'un signal caractéristique de l'heure locale de l'émetteur, mémorisé dans le récepteur/l'enregistreur, à un signal caractéristique de l'heure locale du récepteur, dérivé de l'horloge de ce dernier, et
- à l'aide de ce signal d'erreur, qui représente une mesure du décalage horaire entre l'heure locale de l'émetteur de la séquence de programme devant être enregistrée et l'heure locale du récepteur, l'instant de démarrage et l'instant d'arrêt communiqués au récepteur sont adaptés à la durée effective d'émission de la séquence de programme devant être enregistrée.